**Europäisches Patentamt**

**European Patent Office**

**Office européen des brevets**

(19)

(11) Numéro de publication: **0 160 599**
**B1**

(12) **FASCICULE DE BREVET EUROPÉEN**

(51) Int. Cl.⁴: **F 16 D 3/79,** F 16 D 3/28

(45) Date de publication du fascicule du brevet:
**20.07.88**

(21) Numéro de dépôt: **85400655.8**

(22) Date de dépôt: **02.04.85**

(54) Dispositif d'accouplement élastique, notamment pour colonne de direction de véhicule automobile.

(30) Priorité: **04.04.84 FR 8405318**

(43) Date de publication de la demande:
**06.11.85 Bulletin 85/45**

(45) Mention de la délivrance du brevet:
**20.07.88 Bulletin 88/29**

(84) Etats contractants désignés:
**DE GB IT NL SE**

(56) Documents cité:
**DE-C-660 305**
**FR-A-1 476 802**
**FR-A-2 167 265**
**GB-A-611 389**
**GB-A-616 486**
**GB-A-1 353 418**
**US-A-2 928 264**
**US-A-3 301 007**
**US-A-4 244 433**

(73) Titulaire: **NACAM Société dite:, Route de Blois,**
**F-41100 Vendome (FR)**

(72) Inventeur: **Haldric, Bernard, 15 rue Charles**
**Lindbergh, F-41100 Vendome (FR)**
Inventeur: **Benedi, Grégorio, 1 rue Maréchal**
**Rochambeau, F-41100 Vendome (FR)**
Inventeur: **Pretot, Daniel, 2 rue Henri Dunant,**
**F-41100 Vendome (FR)**

(74) Mandataire: **Bressand, Georges, c/o CABINET**
**LAVOIX 2 Place d'Estienne d'Orves, F-75441**
**Paris Cedex 09 (FR)**

## Description

La présente invention est relative aux dispositifs d'accouplement de deux arbres et se rapporte plus particulièrement à un dispositif d'accouplement élastique notamment pour colonne de direction de véhicule automobile.

Les dispositifs d'accouplement pour colonnes de direction sont généralement constitués par des joints de cardan dont la construction ne permet qu'imparfaitement d'amortir les vibrations transmises à la colonne de direction par les roues du véhicule.

L'invention vise à remédier à cet inconvénient en créant un dispositif d'accouplement élastique entre deux arbres qui soit capable d'absorber des efforts axiaux et torsionnels, tout en assurant la sécurité de transmission en toutes circonstances.

Parmi l'état dela technique, on a relevé les documents FR-A-1 228 019 et US-A-4 244 433.

Le brevet français est relatif à un joint de cardan dont les mâchoires menante et menée sont équipées chacune de deux ailes, les ailes d'une mâchoire étant enchevêtrées avec celles de l'autre.

Le brevet américain qui concerne un mécanisme de sécurité pour trépan de forage minier comprend une liaison flexible. Cette liaison destinée à assurer un accouplement entre éléments menant et mené est constituée essentiellement d'un tore en élastomère intercalé entre deux couronnes l'une menante et l'autre menée, auxquelles il est fixé.

Parmi l'état de la technique il y a aussi lieu de noter le document FR-A-2 167 265. Ce document concerne un dispositif d'accouplement élastique comprenant des première et seconde chapes qui sont destinées à être respectivement fixées l'une à un organe menant et à un organe mené, qui présentent chacune des ailes qui sont disposées de manière que celles de la première chape soient intercalées avec celles de la seconde chape.

L'invention a pour objet un dispositif d'accouplement élastique destiné à être placé entre organes menant et mené du type de celui exposé dans le préambule de la revendication principale et dont les particularités sont précisées notamment par la partie caractérisante de cette revendication.

L'invention sera mieux comprise à l'aide de la description qui va suivre, donnée uniquement à titre d'exemple et faite en se référant aux dessins annexés , sur lesquels :

- la Fig. 1 est une vue en élévation et en coupe d'un premier mode de réalisation du dispositif d'accouplement élastique suivante l'invention ;
- la Fig. 2 est une vue de dessus du dispositif d'accouplement de la Fig. 1;
- la Fig. 3 est une demi-coupe transversale de la Fig. 1 montrant le dispositif en position d'utilisation normale;
- la Fig. 4 est une demi-coupe analogue à celle de la Fig. 3 montrant le dispositif en position de sécurité d'entraînement;

- la Fig. 5 est une vue analogue à celle de la Fig. 3 montrant la déformation de certains organes du dispositif d'accouplement lorsqu'il est utilisé sous un certain angle;
- la Fig. 6 est une vue en élévation et en coupe d'un autre mode de réalisation du dispositif d'accouplement suivant l'invention;
- la Fig. 7 est une vue en élévation et en coupe d'une variante du dispositif d'accouplement de la Fig. 6;
- la Fig. 8 est une vue en élévation et en coupe d'une autre variante du dispositif de la Fig. 6;
- la Fig. 9 est une vue de face d'un mode de réalisation particulière de flasque entrant dans la construction du dispositif d'accouplement de la Fig. 1;
- la Fig. 10 est une vue partielle en perspective du flasque de la Fig. 9;
- la Fig. 11 est une vue partielle en perspective d'un autre mode de fixation d'un flasque à une chape du dispositif d'accouplement suivant l'invention;
- la Fig. 12 est une vue partielle en perspective éclatée d'une variante de dispositif d'accouplement élastique à élément élastique intérieur.

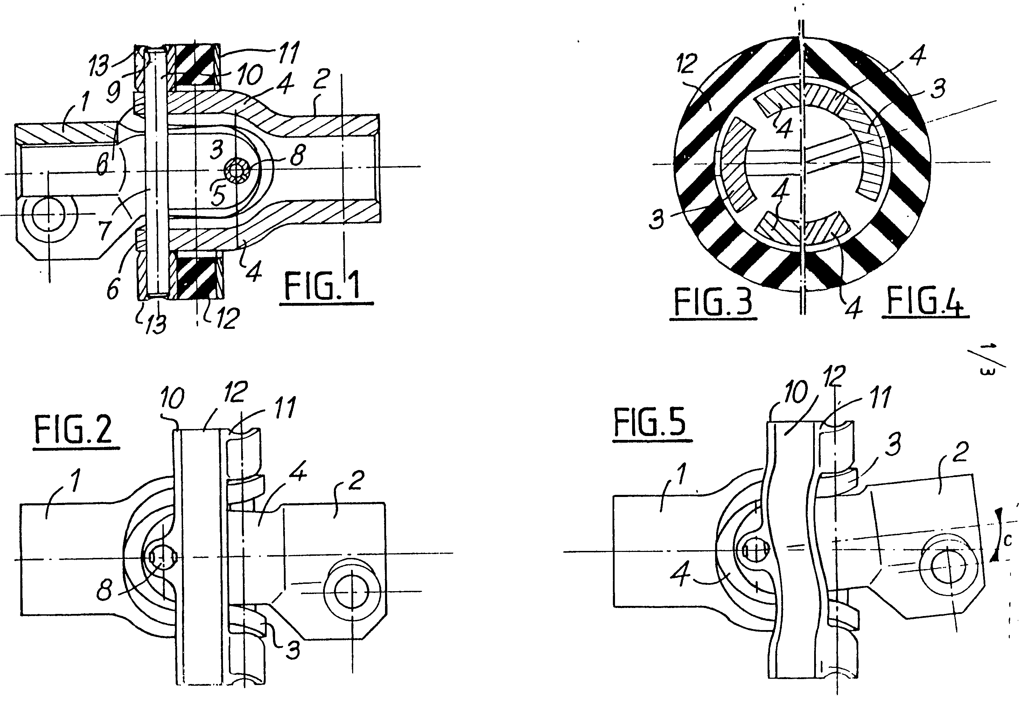

Le dispositif d'accouplement élastique représenté à la Fig.1 comporte deux chapes 1 et 2 à moyeu fendu, destinées à être fixées respectivement sur des arbres non représentés, qui doivent être reliés par le dispositif d'accouplement.

Les ailes 3 de la chape 1 et les ailes 4 de la chape 2 sont percées de trous respectifs 5 et 6 dans lesquels sont montés des axes de liaison 7, 8.

Les extrémités de l'axe 7 qui font saillies vers l'extérieur par rapport aux ailes 4 de la chape 2 sont engagées dans des orifices 9 d'un flasque 10 qui est ainsi rendu solidaire de la chape 2. De la même manière, les extrémités de 1 axe 8 dépassant vers l'extérieur des ailes 3 de la chape 1 sont engagées dans des orifices analogues non représentés d'un flasque 11 qui est ainsi lié à la chape 1.

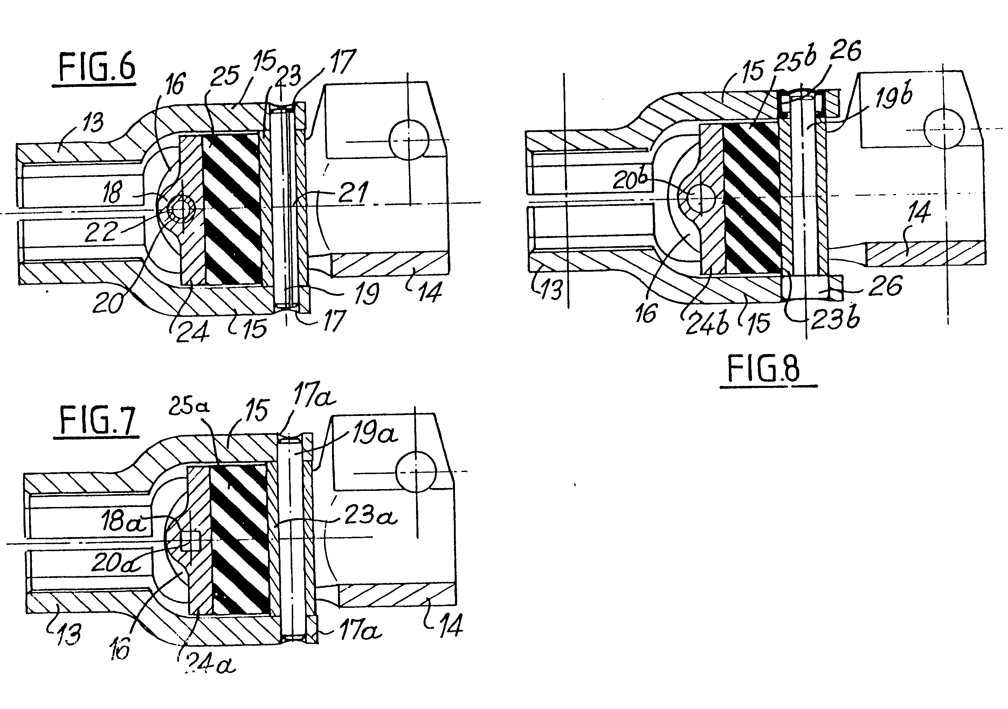

Les flasques 10 et 11 sont reliés entre eux par un élément annulaire 12 en caoutchouc fixé aux faces en regard des flasques 10 et 11 par exemple par adhérisation. Les chapes 1 et 2 sont disposées de telle manière que leurs ailes 3 et 4 soient intercalées comme représente à la Fig. 3. Une telle disposition permet d'obtenir une sécurité d'entrainement en rotation en cas d'endommagement de l'élément en caoutchouc 12, parvenue en contact des ailes 3 et 4 des chapes 1 et 2. comme représenté à la Fig. 4.

Les axes 7 et 8 assurant l'entraînement des flasques 10 et 11 sont croisés et constituent chacun avec la chape à laquelle ils sont fixés, un maillon de retenue axiale pour l'autre ensemble axe-chape. Ceci permet d'obtenir une sécurité dans le sens axial en cas de détérioration de l'élément en caoutchouc 12.

Cet élément de caoutchouc, outre qu'il permet l'accouplement des deux flasques 10 et 11, assure une bonne rigidité de l'ensemble en torsion.

Le maintien en position des axes 7 et 8 est assuré par sertissage comme représenté en 13 à la Fig. 1 obtenue par déplacement de la matière du flasque, par des protubérances venues de moulage prévues autour des extrémités des orifices tels que 9 des flasques ou par tout autre moyen approprié.

Les flasques 10 et 11 sont réalisés en un matériau et présentent des dimensions tels qu'ils peuvent subir des déformations permettant un déplacement axial d'une chape par rapport à l'autre, ce qui donne une souplesse axiale à l'ensemble. En outre, comme représenté à la Fig. 5, la déformation des flasques 10 et 11 permet également de faire fonctionner le dispositif d'accouplement sous un angle non négligeable. Cette déformation des flasques est rendue possible en raison de leur disposition à l'extérieur des chapes.

Les flasques 10 et 11 sont avantageusement réalisés en matière plastique moulée.

Sur la Fig. 6 on a représenté un autre mode de réalisation du dispositif d'accouplement élastique suivant l'invention.

Ce dispositif d'accouplement comporte deux chapes 13, 14 à moyeu fendu, dont les ailes 15, 16 sont respectivement percées de trous 17, 18 dans lesquels sont engagés des axes correspondants 19, 20. Les parties des axes 19, 20 situées entre les ailes 15, 16 des chapes 13, 14, traversent des passages respectifs 21, 22 ménagés dans des flasques 23, 24 en forme de disques rigides disposés à l'intérieur de l'espace laissé libre par les ailes intercalées des chapes et reliés entre eux par un élément de caoutchouc 25 fixé aux faces en regard des flasques 23, 24 par adhérisation.

Les axes 19 et 20 du dispositif d'accouplement de la Fig. 6 sont constitués par des goupilles fendues dont le maintien en place est assuré par leur propre élasticité.

Le dispositif d'accouplement représenté à la Fig. 6 présente des performances analogues à celles du dispositif représenté aux Fig. 1 à 5.

Le dispositif d'accouplement représente à la Fig. 7 est semblable à celui de la Fig. 6 à l'exception du fait que les axes assurant la liaison entre les ailes 15, 16 des chapes 13, 14 et les flasques 23a,24a reliés entre eux par l'élément en caoutchouc 25a sont constitués par des goupilles 19a 20a de section carrée, reçues dans des passages de forme correspondante ménagés dans les flasques 23a, 24a et dont les extremités sont engagées dans des trous 17a, 18a également de section carrée prévus dans les ailes des chapes.

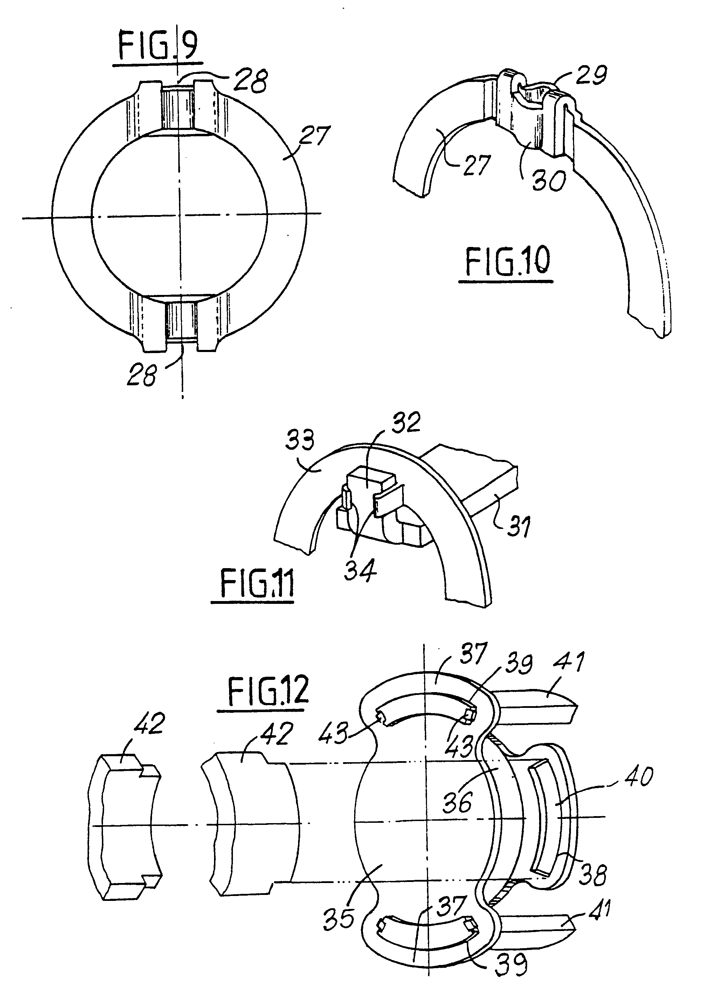

Le dispositif d'accouplement élastique de la Fig. 8 est également semblable à ceux des Fig. 6 et 7 et ne diffère de ceux-ci que par le fait que les axes 19b, 20b, de liaison entre les ailes des chapes et les flasques 23b, 24b reliés entre eux par l'élément en caoutchouc 25b sont montés par leurs extrémités dans les ailes 15, 16 desdites chapes 13, 14 par l'intermédiaire de coussinets ou de roulements à aiguilles 26.

Sur la Fig. 9, on a représenté un mode de réalisation particulier d'un flasque entrant dans la construction du dispositif d'accouplement élastique de la Fig. 1. Ce flasque est constitué par une pièce annulaire 27 en tôle emboutie. Dans deux zones diamétralement opposées de la pièce annulaire 27, sont réalisés des paliers 28 destinés à recevoir un axe de liaison du flasque avec une chape du dispositif d'accouplement à laquelle il est associé. Chaque plier 28 comporte, comme représentè à la Fig. 10 une première moitié 29 réalisée par déformation du flasque proprement dit et une seconde moitié 30 réalisée par déformation et pliage d'une patte radiale liée au flasque. La déformation en 29 du flasque 27 permet de former un évidement dans lequel est reçue l'épaisseur de la patte repliée formant la deuxième moitié 30 du palier de manière que cette deuxième moitié affleure la surface du flasque 27 et ne fasse ainsi aucun obstacle à la fixation par adhérisation audit flasque de l'élément en caoutchouc de liaison avec le flasque associé à l'autre chape du dispositif d'accouplement élastique.

Sur la Fig. 11, on a représenté une variante de fixation des flasques sur une chape du dispositif d'accouplement élastique suivant l'invention. Les ailes 31 de chaque chape comportent une oreille 32 rabattue à angle droit vers l'extérieur et chaque flasque 33 comporte des pattes découpées 34 permettant d'assurer la fixation du flasque 33 sur la chape par sertissage des pattes 34 sur l'oreille 32. Ainsi, le flasque est fixé en deux points diamétralement opposés.

Un tel agencement permet d'assurer une sécurité axiale du dispositif d'accouplement en cas de détérioration de l'élément de liaison en élastomère interposé entre les flasques.

Selon le mode de réalisation de la Fig. 12, chaque flasque de liaison 35, 36 en forme de disque comporte des saillies 37, 38 diamétralement opposées dans lesquelles sont ménagées des lumières 39, 40. Les extrémités des ailes 41, 42 des chapes associées à chacun des flasques 35, 36 sont engagées dans les lumières 39, 40 correspondantes et sont maintenues dans ces lumières par des points de sertissage 43.

Dans les divers modes de réalisation qui viennent d'être décrits en référence aux dessins, les flasques qu'ils soient annulaires comme par exemple dans le dispositif de la Fig. 1, ou en forme de disques, comme par exemple dans le dispositif de la Fig. 6, sont réalisés à peu près plans.

On peut cependant envisager de les réaliser de forme légèrement conique.

Ils peuvent également présenter des surfaces de forme générale plane ou conique, mais pourvues d'ondulations.

Dans les divers exemples décrits plus haut, on a envisagé l'emploi de flasques de liaison en matière plastique ou encore en tôle emboutie. On peut également utiliser des flasques en matériau

composite par exemple en matière plastique chargée de fibres de renforcement.

Bien que certains des dispositifs d'accouplement élastique puissent être utilisés sous un certain angle, les sollicitations angulaires appliquées à l'élément de liaison en élastomère sont limitées par la forme même des chapes chacune d'elles formant pour la chape à laquelle elle est associée, un organe de butée angulaire.

Dans certains modes de réalisation et notamment dans les variantes des Fig. 6 à 8, c'est la rigidité des flasques qui limite les débattements angulaires et axiaux.

Le dispositif d'accouplement élastique qui vient d'être décrit est particulièrement adapté pour être utilisé dans les colonnes de direction de véhicules automobiles.

Il permet en effet d'obtenir une dissociation des caractéristiques torsionnelles prises par l'élément en caoutchouc en cisaillement et les caractéristiques d'effort axial prises par l'élément en caoutchouc en compression-traction dans le cas du dispositif des Fig. 6 à 8 et en flexion de l'ensemble élément de liaison-flasques dans le cas du dispositif des Fig. 1 à 5.

**Revendications**

1. "Dispositif d'accouplement élastique comprenant des première et seconde chapes (1, 2; 13, 14) qui sont destinées à être respectivement fixées à un organe menant et à un organe mené, qui présentent chacune des ailes (3; 15) qui sont disposées de manière que celles de la première chape soient intercalées avec celles (4; 16) de la seconde chape, caractérisé en ce qu'à chaque chape est fixé un flasque (10, 11; 23-24, 23a, 24a; 23b, 24b) et ces deux flasques sont disposés en regard l'un de l'autre de manière à ce que les surfaces en regard de ces derniers soient à peu près perpendiculaires à l'axe de rotation du dispositif, en ce qu'un élément de liaison en élastomère (12; 25; 25a-25b) est fixé sur ces surfaces en regard des flasques, et en ce que chaque flasque est fixé à la chape correspondante à l'aide d'un axe (7 , 8; 19, 20; 19a, 20a; 19b, 20b) engagé dans au moins un orifice (9; 21) dudit flasque et dans des trous (5, 6; 17, 18; 17a, 18a) ménagés dans les ailes (3, 4; 15, 16) de ladite chape".

2. Dispositif d'accouplement suivant la revendication 1 caractérisé en ce que chaque flasque (10, 11) est de forme annulaire et fixé à l'extérieur des chapes (1, 2) sur les extrémités de l'axe (7, 8) correspondant faisant saillie à l'extérieur des ailes desdites chapes et étant engagées dans des orifices (9) ménagés dans ledit flasque, et en ce que l'élément de liaison en élastomère (12) est de forme annulaire et fixé sur les faces en regard desdits flasques (10, 11).

3. Dispositif d'accouplement suivant la revendication 2, caractérisé en ce que les flasques (10, 11) sont d'une épaisseur telle qu'ils présentent une flexibilité propre à assurer un débattement angulaire et/ou axial du dispositif.

4. Dispositif d'accouplement suivant la revendication 1, caractérisé en ce que chaque flasque (23, 24; 23a, 24a; 23b, 25b) est en forme de disque et fixé à l'intérieur des chapes (13, 14) sur l'axe (19, 20; 19a, 20a; 19b, 20b) correspondant dont les extrémités sont engagées dans des trous (17, 18; 17a, 18a) ménagés dans les ailes (15, 16) de la chape correspondante et en ce que l'élément de liaison en élastomère (25; 25a; 25b) est un disque fixé sur les faces en regard desdits flasques.

5. Dispositif d'accouplement suivant l'une des revendications 1 à 4, caractérisé en ce que lesdits axes (7, 8) sont maintenus en position par des sertissages (13) de la matière des flasques (10, 11) entourant les orifices (9) dans lesquels les extrémités desdits axes sont engagés ou encore par des protubérances venues de moulage prévues autour des extrémités desdits orifices.

6. Dispositif d'accouplement suivant l'une des revendications 1 à 4, caractérisé en ce que lesdits axes sont constitués par des goupilles fendues (19, 20) maintenues en place par leur élasticité propre ou bien par des goupilles de section carrée (19a, 20a) engagées dans des trous (17a, 18a) des ailes des chapes et dans des passages de section correspondantes ménagés dans les flasques (23a, 24a).

7. Dispositif d'accouplement suivant la revendication 4, caractérisé en ce que lesdits axes (19b, 20b) sont montés dans les ailes (14, 15) desdites chapes par l'intermédiaire de coussinets ou de roulements à aiguilles (26).

8. Dispositif d'accouplement suivant l'une quelconque des revendications 1 à 7, caractérisé en ce que l'élément de liaison en élastomère est fixé aux flasques par adhérisation.

9. Dispositif d'accouplement suivant l'une quelconque des revendications 1 à 8, caractérisé en ce que lesdits flasques (10, 11; 23, 24; 23a, 24a; 23b, 24b, 27; 30; 35, 36) sont réalisés en matière plastique, en métal ou en matériau composite.

10. Dispositif d'accouplement suivant les revendications 1 et 9 prises ensemble, caractérisé on ce que lesdits flasques annulaires (27) sont réalisés en tôle emboutie, les paliers (28) pour lesdits axes étant formés dans des zônes diamétralement opposées du flasque par des emboutis (29) constituant une première moitié de chaque palier et par des pattes (30) embouties et rabattues sur les emboutis formant la seconde moitié dudit palier.

11. Dispositif d'accouplement suivant la revendication 1, caractérisé en ce que chacun desdits flasques (33) est un flasque de forme annulaire disposé à l'extérieur desdites chapes dont les ailes (31) comportent chacune une oreille (32) rabattue vers l'extérieur, le flasque comportant des pattes découpées (34) au moyen desquelles il est fixé aux ailes (31) des chapes par sertissage.

12. Dispositif d'accouplement suivant la revendication 1, caractérisé en ce que lesdits flasques (35, 36) sont constitués par des disques pourvus de saillies (37, 38) diamétralement opposées dans lesquelles sont ménagées des lumières (39, 40), les extrémités des ailes (41) des chapes correspondantes étant engagées dans lesdites lumières et maintenues dans celles-ci par des points de sertissage.

13. Dispositif d'accouplement suivant l'une des revendications 1 à 12, caractérisé en ce que les flasques sont lisses ou présentent des ondulations.

14. Dispositif d'accouplement suivant l'une des revendications 1 à 13, caractérisé en ce que les surfaces des flasques sont planes ou légèrement coniques.

15. Dispositif suivant l'une des revendications 1 à 14, caractérisé en ce que les ailes intercalées des chapes (1, 2; 13, 14) du dispositif forment des moyens de sécurité d'entraînement en rotation en cas de détérioration de l'élément de liaison en élastomère (12, 25, 25a, 25b)

16. Dispositif d'accouplement suivant l'une quelconque des revendications 1 a 15, caractérisé en ce que chaque flasque (10, 11; 23, 24; 23a, 24a; 23b, 24b; 33; 35, 36) fixé à la chape correspondante (1, 2; 13, 14; 31; 41, 42) forme un maillon de retenue axiale pour l'autre ensemble flasque-chape, en cas de détérioration de l'élément de liaison en élastomère.

**Patentansprüche**

1. Elastische Kupplungseinheit, mit einem ersten und einem zweiten Gabelgelenk (1, 2; 13, 14) zur Befestigung an jeweils einem treibenden Element und einem getriebenen Element, welche so angeordnete Schenkel (3; 15) aufweisen, daß die Schenkel des ersten Gabelgelenks und des zweiten Gabelgelenks (4; 16) ineinandergeschachtelt sind, dadurch gekennzeichnet,
daß an jedem Gabelgelenk eine Zierblende (10, 11; 23, 24; 23a, 24a; 23b, 24b) befestigt ist, wobei die Flächen dieser zwei Zierblenden nahezu senkrecht zur Drehachse der Einheit angeordnet sind, daß ein Verbindungselement aus Elastomer (12; 25, 25a, 25b) an diesen Zierblendenflächen befestigt ist, und daß jede Zierblende an dem jeweiligen Gabelgelenk befestigt ist mittels eines in mindestens eine Öffnung (9; 21) der Zierblende und in in den Schenkeln (3, 4; 15, 16) des Gabelgelenks ausgesparte Ausnehmungen (5, 6; 17, 18; 17a, 18a) eingeführten Bolzens (7, 8; 19, 20; 19a, 20a).

2. Kupplungseinheit nach Anspruch 1, dadurch gekennzeichnet, daß jede Zierblende (10, 11) ringförmig ist und außen an den Gabelgelenken (1, 2) an den Enden des jeweiligen Bolzens (7, 8) befestigt ist, welche über die Schenkel der Gabelgelenke vorstehen und in in der Zierblende ausgesparte Öffnungen (9) eingeführt sind, und daß das Verbindungselement aus Elastomer (12) ringförmig ausgebildet und an den Flächen der Zierblenden (10, 11) befestigt ist.

3. Kupplungseinheit nach Anspruch 2, dadurch gekennzeichnet, daß die Zierblenden (10, 11) aufgrund ihrer Dicke zur Gewährleistung eines winkelförmigen und/oder axialen Federungsspiels der Einheit jeweils eine entsprechende Elastizität aufweisen.

4. Kupplungseinheit nach Anspruch 1, dadurch gekennzeichnet, daß jede Zierblende (23, 24; 23a, 24a; 23b, 24b) scheibenförmig ausgebildet ist und innen an den Gabelgelenken (13, 14) an dem jeweiligen Bolzen (19, 20; 19a, 20a, 19b, 20b) befestigt ist, dessen Enden in in den Schenkeln (15, 16) des jeweiligen Gabelgelenks ausgesparte Ausnehmingen (17, 18; 17a, 18a) eingefuhrt sind, und daß das Verbindungselement aus Elastomer (25, 25a, 25b) eine an den Flächen der Zierblenden befestigte Scheibe ist.

5. Kupplungseinheit nach einem der Ansprüche 1 bis 4, dadurch gekennzeichnet, daß die Bolzen (7, 8) mittels Bördelverbindungen (13) des Zierblendenmaterials (10, 11), welche die Öffnungen (9), in welche die Enden der Bolzen eingeführt sind, umschließen, oder mittels um die Enden der Öffnungen vorgesehenen, beim Formen entstandenen Ausstülpungen in ihrer Stellung gehalten werden.

6. Kupplungseinheit nach einem der Ansprüche 1 bis 4, dadurch gekennzeichnet, daß die Bolzen aus Splinten (19, 20) gebildet werden, welche durch ihre Elastizität oder durch in die Ausnehmungen (17a, 18a) der Schenkel der Gabelgelenke und in in den Zierblenden (23a, 24a) ausgesparte Kanäle mit entsprechendem Querschnitt eingeführte Stifte mit viereckigem Querschnitt (19a, 20a) in ihrer Stellung gehalten werden.

7. Kupplungseinheeit nach Anspruch 4, dadurch gekennzeichnet, daß die Bolzen (19b, 20b) über Wellenlager oder Nadellager (26) in den Schenkeln (14, 15) der Gabelgelenke angeordnet sind.

8. Kupplungseinheit nach einem der Ansprüche 1 bis 7, dadurch gekennzeichnet, daß das Verbindungselement aus Elastomer durch Aufrauhung an den Zierblenden befestigt ist.

9. Kupplungseinheit nach einem der Ansprüche 1 bis 8, dadurch gekennzeichnet, daß die Zierblenden (10, 11; 23, 24; 23a, 24a; 23b, 24b, 27; 30; 35, 36) aus Kuststoff, Metall oder Verbundstoff bestehen.

10. Kupplungseinheit nach einer Kombination der Ansprüche 1 bis 9, dadurch gekennzeichnet, daß die ringförmigen Zierblenden (27) aus Buckelblech bestehen, wobei die Lager (28) für die Bolzen in der Zierblende genau gegenüberliegenden Bereichen ausgebildet sind und aus eine erste Hälfte jedes Lagers bildenden Stulpen (29) und aus gekrümpelten und an den Stulpen umgebogenen Klauen (30) bestehen.

11. Kupplungseinheit nach Anspruch 1, dadurch gekennzeichnet, daß jede der Zierblenden (33) ringförmig und außen an den Gabelgelenken angeordnet ist, deren Schenkel (31) jeweils eine nach außen umgebogene Klammer (32) aufweisen, wobei die Zierblende abgeschnittene Klauen (34) aufweist, mit Welchen sie an den Schenkeln (31) der Gabelgelenke durch eine Bördelverbindung befestigt ist.

12. Kupplungseinheit nach Anspruch 1, dadurch gekennzeichnet, daß die Zierblenden (35, 36) aus mit einander gegenüberliegenden Auskragungen (37, 38) versehenen Scheiben bestehen, wobei in den Auskragungen Langlöcher (39, 40) ausgespart sind, und die Enden der Schenkel (41) der jeweiligen Gabelgelenke in die Langlöcher eingeführt und durch Bördelverbindungsstellen darin gehalten werden.

13. Kupplungseinheit nach einem der Ansprüche 1 bis 12, dadurch gekennzeichnet, daß die Zierblenden glatt oder gewellt ausgebildet sind.

14. Kupplungseinheit nach einem der Asnprüche 1 bis 13, dadurch gekennzeichnet, daß die Flächen der Zierblenden eben oder leicht konisch ausgebildet sind.

15. Kupplungseinheit nach einem der Ansprüche 1 bis 14, dadurch gekennzeichnet, daß die ineinandergeschachtelten Schenkel der Gabelgelenke (1, 2; 13, 14) der Einheit bei Drehantrieb Sicherungselemente im Falle einer Beschädigung oder Abnutzung des Verbindungselementes aus Elastomer (12; 25, 25a, 25b) bilden.

16. Kupplungseinheit nach einem der Ansprüche 1 bis 15, dadurch gekennzeichnet, daß jede an dem jeweiligen Gabelgelenk (1, 2; 13, 14; 31; 41, 42) befestigte Zierblende (10, 11; 23, 24; 23a, 24a; 23b, 24b; 33; 35, 36) ein Element zum axialen Haltern für den anderen Komplex Zierblende-Gabelgelenk im Falle der Beschädigung oder Abnutzung des Verbindungselementes aus Elastomer bildet.

**Claims**

1. Flexible coupling device comprising first and second yokes (1, 2; 13, 14) which are intended to befixed, respectively, to a drive member and a driven member, which each have arms (3; 15) arranged so that the arms of the first yoke are interposed with those (4; 16) of the second yoke, characterised in that to each yoke is fixed a support (10, 11; 23, 24, 23a, 24a; 23b, 24b) and these two supports are arranged opposite each other so that the facing surfaces of these supports are substantially perpendicular to the rotation axis of the device, in that an elastomeric linking element (12; 25; 25a, 25b) is fixed to these facing surfaces of the supports, and in that each support is fixed to the corresponding yoke by means of a spindle (7,8; 19, 20; 19a, 20a; 19b, 20b) engaging in at least one opening (9; 21) in said support and in holec (5, 6; 17, 18; 17a, 18a) provided in the arms (3, 4; 15, 16) of said yoke.

2. Coupling device according to claim 1, characterised in that each support (10, 11) is annular in shape and fixed to the outside of the yokes (1, 2) at the ends of the corresponding spindle (7, 8) projecting outside the arms of said yokes and engaging in openings (9) provided in said support, and in that the elastomeric linking element (12) is annular in shape and fixed to the facing surfaces of said supports (10, 11).

3. Coupling device as claimed in claim 2, characterised in that the supports (10, 11) are of a thickness such that they have the right amount of flexibility to ensure angular and/or axial movement of the device.

4. Coupling device according to claim 1, characterised in that each support (23, 24; 23a, 24a; 23b, 25b) is in the form of a disc and is fixed to the inside of the yokes (13, 14) on the corresponding spindle (19, 20; 19a, 20a; 19b, 20b) the ends of which engage in holes (17, 18; 17a, 18a) formed in the arm (15, 16) of the corresponding yoke and in that the elastomeric linking element (25; 25a; 25b) is a disc fixed to the facing surfaces of said supports.

5. Coupling device according to one of claims 1, to 4, characterised in that the spindles (7, 8) are held in position by crimps (13) in the material of the supports (10, 11) surrounding the openings (9) in which the ends of said spindles engage or by protuberances formed by moulding around the ends of said openings.

6. Coupling device according to one of claims 1 to 4, characterised in that the spindles consist of split pins (19, 20) held in place by their inherent elasticity or by pins of square section (19a, 20a) engaging in holes (17a, 18a) in the arms of the yokes and in passages of corresponding cross-section provided in the supports (23a, 24a).

7. Coupling device according to claim 4, characterised in that the spindles (19b, 20b) are mounted in the arms (14, 15) of said yokes via bearings or roller bearings (26).

8. Coupling device according to any one of claims 1 to 7, characterised in that the elastomeric linking element is fixed to the supports fly adhesive bonding.

9. Coupling device according to any one of claims 1 to 8, characterised in that the supports (10, 11; 23, 24; 23a, 24a; 23b, 24b, 27; 30; 35; 36) are made of plastics, metal or composite material.

10. Coupling device according to claims 1 and 9 taken together, characterised in that the annular supports (27) are made of stamped sheet metal, the bearings (28) for said spindles being formed in diammetrically opposite zones of said support by stamped portions (29) constituting a first half of each bearing and by tabs (30) which are stamped and folded back onto the stamped portions, forming the second half of the bearing.

11. Coupling device according to claim 1, characterised in that each of said supports (33) is a support of annular shape arranged outside the yokes, the arms (31) of which each comprise a lug (32) folded back towards the outside, the support comprising cut-out cabs (34) by means of which it is fixed to the arms (31) of the yokes by crimping.

12. Coupling device according to claim 1, characterised in that the said supports (35, 36) consist of discs provided with diammetricallt opposed projections (37, 38) in which are provided openings (39, 40), the ends of the arms (41) of the corresponding yokes engaging in said openings ana being held therein by crimping points.

13. Coupling device according to one of claims 1 to 12, characterised in that the supports are smooth or undulating.

14. Coupling device according to one of claims 1 to 13, characterised in that the surfaces of the supports are flat or slightly cortical.

15. Device according to one of claims 1 to 14, characterised in that the interposed arms of the yokes (1, 2; 13, 14) of the device form a safety device for ratational driving in the event of deterioration of the elastomeric linking element (12, 25, 25a, 25b).

16. Coupling device according to any one of claims 1 to 15, characterised in that each support (10, 11; 23, 24; 23a, 24a; 23b, 24b; 33; 35, 36) fixed to the corresponding yoke (1, 2; 13, 14; 31; 41, 42) forms an axial retaining link for the other support-yoke assembly, in the event of deterioration of the elastomeric linking element.

FIG.3

FIG.4

FIG.5

FIG.1

FIG.2

FIG.6

FIG.7

FIG.8

13 16 25 15 23 17 21 14 19 17 18 22 15 24 20

17a 25a 15 19a 23a 14 18a 20a 16 24a 13 17a

15 25b 26 19b 14 26 23b 20b 16 24b 15 13

3

0 160 599

FIG.9

FIG.10

FIG.11

FIG.12